# EUROPÄISCHE PATENTSCHRIFT

(11) **EP 2 820 796 B1**
(45) Veröffentlichungstag und Bekanntmachung des Hinweises auf die Patenterteilung: **12.09.2018**
(21) Anmeldenummer: 13708344.0
(22) Anmeldetag: 25.02.2013
(51) Int. Cl.: H04L 9/32, G07B 15/00

(54) **VERFAHREN ZUM ÜBERWACHEN EINES SYSTEMS AUS EINER ANZAHL VON LESEGERÄTEN UND EINER VIELZAHL VON TRAGBAREN KOMMUNIKATIONSEINHEITEN**
METHOD FOR MONITORING A SYSTEM COMPRISING A NUMBER OF READERS AND A MULTIPLICITY OF PORTABLE COMMUNICATION UNITS
PROCÉDÉ DE SURVEILLANCE D'UN SYSTÈME CONSTITUÉ D'UNE QUANTITÉ DE LECTEURS ET D'UNE PLURALITÉ D'UNITÉS DE COMMUNICATION PORTATIVES.

(30) Priorität: 27.02.2012 DE 102012003862
(43) Veröffentlichungstag der Anmeldung: 07.01.2015
(73) Patentinhaber: Giesecke+Devrient Mobile Security GmbH, 81677 München (DE)
(72) Erfinder: HINZ, Walter, 85748 Garching (DE); FINKENZELLER, Klaus, 85774 Unterföhring (DE)
(86) Internationale Anmeldenummer: PCT/EP2013/000541
(87) Internationale Veröffentlichungsnummer: WO 2013/127511

(56) Entgegenhaltungen:
- US-B2- 6 766 161
- A. Ilic ET AL: "Synchronized Secrets Approach for RFID-enabled Anti-Counterfeiting", Internet of Things Conference 2008, 1. Januar 2008 (2008-01-01), XP55062993, Zurich, CH Gefunden im Internet: URL:http://www.stop-project.eu/Portals/1/p ublications/080128_Demo_IoT_v07.pdf [gefunden am 2013-05-15]
- MD FOISAL MAHEDI HASAN ET AL: "RFID-based ticketing for public transport system: Perspective megacity Dhaka", COMPUTER SCIENCE AND INFORMATION TECHNOLOGY (ICCSIT), 2010 3RD IEEE INTERNATIONAL CONFERENCE ON, IEEE, PISCATAWAY, NJ, USA, 9. Juli 2010 (2010-07-09), Seiten 459-462, XP031747594, ISBN: 978-1-4244-5537-9
- LEHTONEN M ET AL: "How to detect cloned tags in a reliable way from incomplete RFID traces", RFID, 2009 IEEE INTERNATIONAL CONFERENCE ON, IEEE, PISCATAWAY, NJ, USA, 27. April 2009 (2009-04-27), Seiten 257-264, XP031573176, ISBN: 978-1-4244-3337-7

## Beschreibung

Die Erfindung betrifft ein Verfahren zum Überwachen eines Systems aus einer Anzahl von Lesegeräten und einer Vielzahl von tragbaren Kommunikationseinheiten.

Aus dem Stand der Technik sind Systeme bekannt, mit denen in Anspruch genommene Dienstleistungen über einen Datenaustausch zwischen einem Lesegerät und einer vom Nutzer mitgeführten tragbaren Kommunikationseinheit erfasst werden, so dass diese Dienstleistungen zu einem späteren Zeitpunkt dem Nutzer in Rechnung gestellt werden können. Systeme zur Erfassung von Dienstleistungen sind insbesondere aus dem Bereich des öffentlichen Personenverkehrs bekannt. Dabei werden über entsprechende Lesegeräte in Verkehrsmitteln, welche mit den Kommunikationseinheiten von Nutzern kommunizieren, die gefahrenen Strecken erfasst.

In den soeben beschriebenen Systemen werden als tragbare Kommunikationseinheiten häufig RFID-Tags verwendet, welche mit einem entsprechenden Lesegerät kontaktlos kommunizieren. In vielen Anwendungen kommen dabei UHF-RFID-Tags zum Einsatz, welche von einem entsprechenden RFID-Lesegerät abgefragt werden können und ihre Identität durch Modulation, der an der Antenne des Tags zurückgestreuten Hochfrequenzenergie (Backscatter), zurücksenden. Da UHF-Tags keine eigene Energieversorgung haben, sind sie in der Regel einfach aufgebaut und nur unzureichend gegen Fälschungen geschützt.

In der Druckschrift A. Arbit, J. Oron, A. Wool, Toward Practical Public Key Anti-Counterfeiting for Low-Cost EPC Tags, 2011, IEEE International Conference on RFID, wird ein Protokoll basierend auf einer Public-Key-Kryptographie zur gesicherten Identifikation von RFID-Tags beschrieben. Dieses Protokoll verhindert zwar die Erstellung neuer Tags, schützt jedoch nicht gegen die Herstellung von Duplikaten bereits bestehender Tags.

In der Druckschrift US 6,766,161 B2 wird ein Verfahren zur Erkennung von duplizierten Kommunikationsgeräten basierend auf Transaktionscodes beschrieben. Dabei wird in einem Host und einem Kommunikationsgerät eine Sequenz von aufeinander folgenden Transaktionscodes vorgehalten, wobei bei jeder Kommunikation zwischen Host und Kommunikationsgerät ein neuer Transaktionscode aus der Sequenz zum Host übertragen wird. Der Host überprüft anschließend, ob der übertragene Transaktionscode mit dem Transaktionscode übereinstimmt, der gemäß der bei ihm hinterlegten Sequenz zu erwarten ist.

In "RFID-based Ticekting for Public Transport System: Perspective Megacity Dhaka" von Hasan, Tangim et al. werden Ankunftszeiten von Bussen mittels am Bus angeordneten RFID-Tags erfasst und im Ticket-System verwendet.

Das Klonen von RFID-Tags wird in "How to detect Cloned Tags in a Reliable Way from Incomplete RFID Traces" von Lehtonen et al. erkannt durch Überprüfen von tatsächlichen, unterschiedlichen Events im Vergleich mit einem vorab bestimmten Referenz-Modell für die Events.

Gemäß "Synchronized Secrets Approach for RFID-enabled Anti-Counterfeiting" von A. Ilic et al. wird ein in einem Server hinterlegtes und ein in ein RFID-Tag nach jedem Auslesen gespeichertes jeweils neues Geheimnis auf Identität geprüft wird, um geklonte RFID-Tags zu erkennen.

Aufgabe der Erfindung ist es, den Betrieb eines Systems aus einer Anzahl von Lesegeräten und einer Vielzahl von tragbaren Kommunikationseinheiten dahingehend zu verbessern, dass ein effizienter aber flexibler Schutz gegen das Duplizieren von Kommunikationseinheiten gewährleistet ist.

Diese Aufgabe wird durch das Verfahren gemäß Patentanspruch 1 bzw. das System gemäß Patentanspruch 13 gelöst. Weiterbildungen der Erfindung sind in den abhängigen Ansprüchen definiert.

Das erfindungsgemäße Verfahren dient zum Überwachen eines Systems aus einer Anzahl von Lesegeräten und einer Vielzahl von tragbaren Kommunikationseinheiten. Im Betrieb des Systems wird für eine vorgegebene Kom munikationseinheit, welche eine beliebige Kommunikationseinheit der Vielzahl von Kommunikationseinheiten darstellen kann, eine Vielzahl von Datentransaktionen zwischen zumindest einem Lesegerät und der vorgegebenen Kommunikationseinheit über eine entsprechende Kommunikationsschnittstelle durchgeführt. Sofern das System mehrere Lesegeräte umfasst, können an den Datentransaktionen auch unterschiedliche Lesegeräte beteiligt sein. Eine einzelne Datentransaktion wird jedoch immer zwischen einem Lesegerät und der vorgegebenen Kommunikationseinheit durchgeführt. Vorzugsweise ist die Kommunikationsschnittstelle zwischen Lesegerät und Kommunikationseinheit eine kontaktlose Schnittstelle und die tragbaren Kommunikationseinheiten stellen entsprechend ausgestaltete Transponder dar, welche mit geeigneten kontaktlosen Lesegeräten kommunizieren. Insbesondere sind die Transponder die oben erwähnten RFID-Transponder bzw. UHF-RFID-Transponder.

Im Rahmen einer Datentransaktion wird im Betrieb des Systems ein erster Datensatz von einem Lesegerät zu der vorgegebenen Kommunikationseinheit übertragen und dort gespeichert. Ferner wird ein zweiter Datensatz, der bei der zuletzt durchgeführten Datentransaktion in der vorgegebenen Kommunikationseinheit gespeichert wurde, an das Lesegerät übermittelt. Unter einer durchgeführten Datentransaktion ist dabei eine Datentransaktion zu verstehen, welche abgeschlossen wurde, d.h. für welche die Speicherung eines ersten Datensatzes sowie die Übermittlung eines zweiten Datensatzes durchgeführt wurden.

Im erfindungsgemäßen Verfahren wird mit einer Rechnereinheit, welche z.B. als zentraler Server ausgestaltet sein kann, eine geeignete Auswertung der im System übermittelten Datensätze durchgeführt. Dabei wird eine Verkettung von Datenpaaren aus dem ersten und zweiten Datensatz der jeweiligen Datentransaktionen derart gebildet, dass für zwei aufeinander folgende Datenpaare der Verkettung der erste Datensatz des einen Datenpaars dem zweiten Datensatz des anderen Datenpaars entspricht. Diese Verkettung kann ggf. auch unterbrochen sein. Beim Bilden der Verkettung wird ein Kriterium überprüft, welches dann erfüllt ist, wenn die Verkettung mehrere parallele Ketten von Datenpaaren aufweist oder wenn zwei Datenpaare aufgefunden werden, welche unterschiedliche erste Datensätze bei gleichem zweiten Datensatz umfassen.

Unter parallelen Ketten sind dabei unabhängig voneinander bzw. zumindest teilweise zeitlich überlappende Ketten von Datenpaaren zu verstehen. Die Ketten enthalten jeweils aufeinander folgende Datenpaare gemäß obiger Definition, d.h. für zwei aufeinander folgende Datenpaare entspricht der erste Datensatz des einen Datenpaars dem zweiten Datensatz des anderen Datenpaars. Nichtsdestotrotz kann eine Kette auch an einer oder mehreren Stellen unterbrochen sein. Das Auftreten von parallelen Ketten lässt dabei den Schluss zu, dass zwei identische Kommunikationseinheiten nebeneinander existieren und Datentransaktionen durchführen, welche nicht miteinander zusammenhängen. Bei der Erkennung solcher Ketten bzw. von Datenpaaren mit unterschiedlichen ersten und gleichen zweiten Datensätzen, wird durch die Rechnereinheit ein Duplizieren der vorgegebenen Kommunikationseinheit erkannt. Als Folge können entsprechende Gegenmaßnahmen eingeleitet werden. In einer bevorzugten Ausführungsform wird die Kommunikationseinheit im System für eine weitere Verwendung gesperrt.

Das erfindungsgemäße Verfahren hat den Vorteil, dass Duplikate zuverlässig auch bei sehr einfach aufgebauten Kommunikationseinheiten erkannt werden. Insbesondere müssen keine komplexen kryptographischen Protokolle in den Kommunikationseinheiten implementiert werden, denn ein Klonen einer Kommunikationseinheit wird im System über die Verkettung von Datenpaaren erfasst.

In einer besonders bevorzugten Ausführungsform des erfindungsgemäßen Verfahrens umfasst ein jeweiliger erster Datensatz eine Zeitinformation betreffend die Durchführung der Datentransaktion unter Verwendung dieses ersten Datensatzes. Dabei werden mehrere parallele Ketten in einfacher Weise dadurch detektiert, dass die Datenpaare in der zeitlichen Reihenfolge der Zeitinformationen ihrer ersten Datensätze angeordnet werden und das Vorhandensein paralleler Ketten dann festgestellt wird, wenn sich ein zweiter Datensatz eines Datenpaars vom ersten Datensatz eines in der zeitlichen Reihenfolge unmittelbar vorhergehenden Datenpaars unterscheidet. Der Begriff der Zeitinformation ist dabei weit zu verstehen und muss keine explizite Zeitangabe umfassen. Z.B. kann eine Zeitinformation durch aufeinander folgende Sequenznummern codiert werden.

In einer weiteren, besonders bevorzugten Ausführungsform der Erfindung werden die jeweiligen zweiten Datensätze übermittelt, ohne dass Zusatzinformationen von der vorgegebenen Kommunikationseinheit hinzugefügt werden. Hierdurch kann das Verfahren besonders einfach implementiert werden, denn die jeweiligen Kommunikationseinheiten müssen lediglich zuvor empfangene Datensätze ohne weitere Verarbeitung nochmals aussenden.

In einer weiteren Ausgestaltung des erfindungsgemäßen Verfahrens wird der erste Datensatz im Rahmen einer Datentransaktion in Kombination mit einem Schreibkommando übermittelt, welches eine erste Speicheradresse in einem Speicher der vorgegebenen Kommunikationseinheit spezifiziert, woraufhin der erste Datensatz an der ersten Speicheradresse gespeichert wird. Hierbei können einfache Schreibkommandos ("write"), wie sie beispielsweise aus dem Standard ISO/IEC 18000-63 (vormals ISO/IEC 18000-6C) bekannt sind, eingesetzt werden.

In einer weiteren Ausführungsform der Erfindung ist die oben beschriebene Speicherung an der ersten Speicheradresse lediglich temporär. Das heißt, der erste Datensatz wird vor der endgültigen Speicherung an einer zweiten Speicheradresse nur vorübergehend an der ersten Speicheradresse gespeichert, und zwar bis der erste Datensatz einer Überprüfung unterzogen wurde.

In einer bevorzugten Variante wird bei dieser Überprüfung der erste Datensatz mit dem bei der zuletzt durchgeführten Datentransaktion gespeicherten ersten Datensatz verglichen und/oder eine Signatur verifiziert, welche dem ersten Datensatz vom Lesegerät hinzugefügt wurde. Im Falle einer ausreichenden Differenz zwischen dem ersten Datensatz und dem bei der zuletzt durchgeführten Datentransaktion gespeicherten ersten Datensatz und/oder bei einer erfolgreichen Verifikation der Signatur wird schließlich der erste Datensatz an der zweiten Speicheradresse gespeichert. Ansonsten wird der erste Datensatz verworfen, so dass die Datentransaktion nicht erfolgreich abgeschlossen wurde. Mit dieser Variante wird eine mehrfache Speicherung von gleichen bzw. ähnlichen Datensätzen vermieden. Je nach Ausführungsform kann das Kriterium der ausreichenden Differenz geeignet festgelegt werden. Z.B. kann sich das Kriterium der ausreichenden Differenz nur auf bestimmte Felder in dem Datensatz beziehen. Das heißt, ein Unterschied in den anderen Feldern stellt keine ausreichende Differenz dar, die zur Speicherung des Datensatzes führt.

In einer weiteren Ausgestaltung des erfindungsgemäßen Verfahrens wird im Rahmen einer Datentransaktion der an der zweiten Speicheradresse gespeicherte erste Datensatz der vorhergehenden Datentransaktion mittels eines Lesekommandos als zweiter Datensatz ausgelesen und an das Lesegerät übermittelt. Dabei kann wiederum ein einfaches herkömmliches Lesekommando verwendet werden, wie es beispielsweise in dem oben genannten Standard ISO/IEC 18000-63 beschrieben ist.

In einer weiteren Ausgestaltung des erfindungsgemäßen Verfahrens werden für mehrere in der Vergangenheit durchgeführte und aufeinander folgende Datentransaktionen die jeweiligen ersten Datensätze in der vorgegebenen Kommunikationseinheit gespeichert, vorzugsweise in einem Ringspeicher oder FIFO-Speicher. Auf diese Weise wird es ermöglicht, eine größere Anzahl von Datentransaktionen in der Kommunikationseinheit vorzuhalten und bei Bedarf auszulesen. Vorzugsweise können diese ersten Datensätze durch aufeinander folgende Lesekommandos auf eine vorbestimmte Speicheradresse in der vorgegebenen Kommunikationseinheit ausgelesen werden. Insbesondere kann dabei die vorbestimmte Speicheradresse einen Zeiger verwenden, der auf den aktuell auszulesenden Datensatz zeigt, wobei nach Auslesen dieses Datensatzes der Zeiger inkrementiert wird, so dass beim nächsten Lesekommando der nächste Datensatz ausgelesen wird.

In einer besonders bevorzugten Ausführungsform wird die Erfindung für ein System eingesetzt, welches mehrere Lesegeräte verwendet, wobei die sich aus den Datentransaktionen der jeweiligen Lesegeräte ergebenden Datenpaare an die Rechnereinheit übermittelt werden, welche in diesem Fall als zentrale Rechnereinheit ausgestaltet ist, die beispielsweise vom Betreiber des Systems verwaltet wird. In dieser Rechnereinheit erfolgt dann die erfindungsgemäße Auswertung der Datenpaare basierend auf der beschriebenen Verkettung, um hierdurch duplizierte Kommunikationseinheiten zu erkennen.

Das erfindungsgemäße Verfahren wird insbesondere in den bereits eingangs beschriebenen Systemen zum Erfassen von Dienstleistungen eingesetzt, wobei die Erbringung der Dienstleistung über die Datentransaktionen erfasst wird. In einer besonders bevorzugten Ausführungsform ist das System ein Fahrkartensystem für den öffentlichen Personenverkehr, wobei die ersten Datensätze jeweils eine Streckeninformation beinhalten, welche insbesondere eine Route und einen Streckenabschnitt auf der Route und gegebenenfalls auch noch weitere Informationen umfasst.

Neben dem oben beschriebenen Verfahren betrifft die Erfindung ferner ein System aus einer Anzahl von Lesegeräten und einer Vielzahl von tragbaren Kommunikationseinheiten. In Analogie zum obigen Verfahren wird im Betrieb des Systems für eine vorgegebene Kommunikationseinheit eine Vielzahl von Datentransaktionen zwischen zumindest einem Lesegerät und der vorgegebenen Kommunikationseinheit über eine entsprechende Kommunikationsschnittstelle durchgeführt, wobei im Rahmen einer Datentransaktion ein erster Datensatz von einem Lesegerät zur vorgegebenen Kommunikationseinheit übertragen und dort gespeichert wird sowie ein zweiter Datensatz, der bei der zuletzt durchgeführten Datentransaktion in der vorgegebenen Kommunikationseinheit gespeichert wurde, an das Lesegerät übermittelt wird.

Das System beinhaltet eine Rechnereinheit, mittels der eine Verkettung von Datenpaaren aus dem ersten und zweiten Datensatz der jeweiligen Datentranskationen derart gebildet wird, dass für zwei aufeinander folgende Datenpaare der erste Datensatz des einen Datenpaars den zweiten Datensatz des anderen Datenpaars entspricht. Beim Bilden der Verkettung wird dabei ein Kriterium überprüft, welches dann erfüllt ist, wenn die Verkettung mehrere parallele Ketten von Datenpaaren aufweist oder wenn zwei Datenpaare aufgefunden werden, welche unterschiedliche erste Datensätze bei gleichem zweitem Datensatz umfassen. Mit der Rechnereinheit wird ein Duplizieren der vorgegebenen Kommunikationseinheit dann erkannt, wenn das Kriterium erfüllt ist.

Das oben beschriebene erfindungsgemäße System ist vorzugsweise derart ausgestaltet, dass mit dem System eine oder mehrere der bevorzugten Varianten des erfindungsgemäßen Verfahrens durchführbar sind.

Ausführungsbeispiele der Erfindung werden nachfolgend anhand der beigefügten Figuren detailliert beschrieben.

Es zeigen:
- Fig. 1: eine schematische Darstellung einer ersten Ausführungsform des erfindungsgemäßen Verfahrens;
- Fig. 2: den Aufbau eines ersten Datensatzes, der in der Ausführungsform der Fig. 1 verwendet wird; und
- Fig. 3: eine schematische Darstellung, welche die Speicherverwaltung in dem RFID-Transponder wiedergibt, der in der Ausführungsform der Fig. 1 eingesetzt wird.

Nachfolgend wird eine Ausführungsform des erfindungsgemäßen Verfahrens basierend auf einem BiBo-System eines öffentlichen Personennahverkehrs (BiBo = Be in Be out) erläutert. Dabei tragen Nutzer des öffentlichen Nahverkehrs eine Kommunikationseinheit in der Form eines UHF-RFID-Tags bzw. Transponders mit sich. Ein solcher Tag basiert auf dem Standard ISO/IEC 18000-63. Diese Norm spezifiziert kontaktlose Transponder und Lesegeräte, die in einem UHF-Band von ca. 860 MHz bis 950 MHz arbeiten. Die Transponder werden mit einem normgemäßen RFID-Lesegerät abgefragt und senden daraufhin ihre Identität durch Modulation der von der Antenne des Transponders gestreuten Hochfrequenzenergie zurück (sog. Backscatter-Verfahren). Die Betriebsenergie wird von den RFID-Tags aus der von dem Lesegerät abgestrahlten Hochfrequenzenergie entnommen, sofern es sich um passive RFID-Tags handelt. Der Standard ermöglicht darüber hinaus auch batteriegestützte passive Tags (BAP = battery assysted passive).

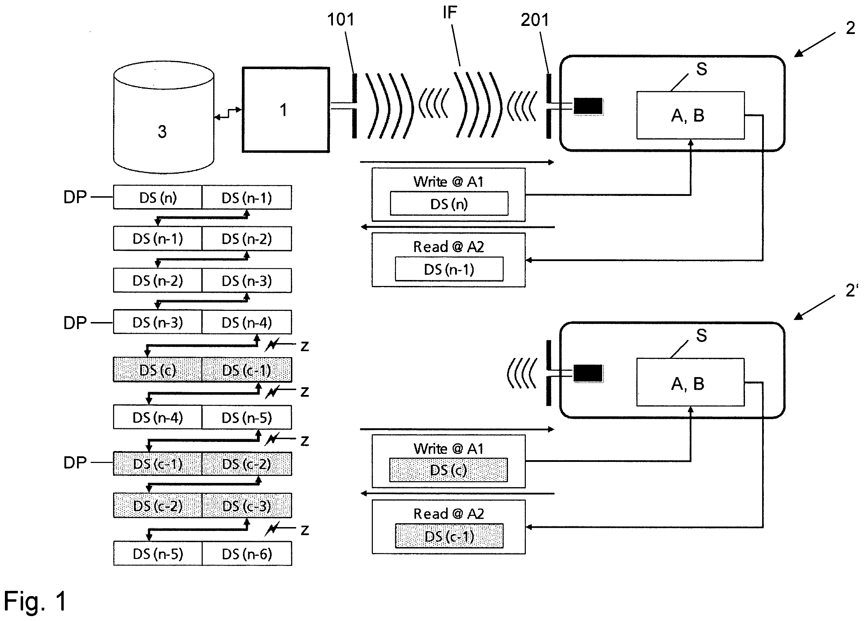

Im Rahmen des BiBo-Systems wird über die kontaktlose Kommunikation zwischen dem RFID-Tag und den entsprechenden Lesegeräten in den Verkehrsmitteln, welche eine Person mit dem Tag verwendet, die Route dieser Person erfasst. Beim Wechsel des Verkehrsmittels wird die Routenerfassung dabei mit dem entsprechenden Lesegerät des neuen Verkehrsmittels fortgesetzt. Auf diese Weise werden Datensätze generiert, welche an den Betreiber des BiBo-Systems übermittelt werden, der hierdurch die in einem Abrechnungszeitraum zurückgelegten Routen erfassen kann und dem Inhaber des Tags in Rechnung stellen kann. Dabei kann es zu Missbrauch dahingehend kommen, dass ein entsprechender Tag durch einen Dritten geklont bzw. dupliziert wird und im BiBo-System missbräuchlich genutzt wird. Die entstandenen Fahrtkosten werden dann dem Inhaber des ursprünglichen Tags in Rechnung gestellt. Dabei ist zu berücksichtigen, dass die Hardware eines UHF-Tags nur unzureichend gegen ein Klonen geschützt werden kann. Dies liegt daran, dass die von einem UHF-Tag aus dem Hochfrequenzfeld des Lesegeräts entnehmbare Energie im Allgemeinen so gering ist, dass im Tag meist nur einfachste Schaltungen verbaut sind und somit keine komplexen kryptographischen Protokolle bzw. Operationen realisiert werden können. Mit den im Folgenden beschriebenen Ausführungsformen des erfindungsgemäßen Verfahrens wird im Betrieb des BiBo-Systems ein geeigneter Mechanismus zur effizienten Erkennung von geklonten Tags realisiert. Fig. 1 zeigt dabei die Kommunikation eines Lesegeräts 1 mit einem entsprechenden RFID-Tag 2 in einem solchen BiBo-System. Die Kommunikation erfolgt über die kontaktlose Schnittstelle IF, über die zwischen der Antenne 101 des Lesegeräts 1 und der Antenne 201 des Tags 2 Informationen ausgetauscht werden. Das System umfasst eine Vielzahl von Lesegeräten 1, welche in den entsprechenden Verkehrsmitteln des öffentlichen Nahverkehrs vorgesehen sind. Diese Geräte kommunizieren mit den entsprechenden Tags in Reichweite. Hierdurch kann für jedes Tag eine Information in Bezug auf die zurückgelegte Route in der Form entsprechender Datensätze erfasst werden, welche von den Lesegeräten an eine zentrale Rechnereinheit bzw. Datenbank 3 übermittelt werden. Dort wird dann vom Systembetreiber eine Abrechnung der zurückgelegten Fahrten in einem bestimmten Abrechnungszeitraum gegenüber den Besitzern der jeweiligen Tags vorgenommen.

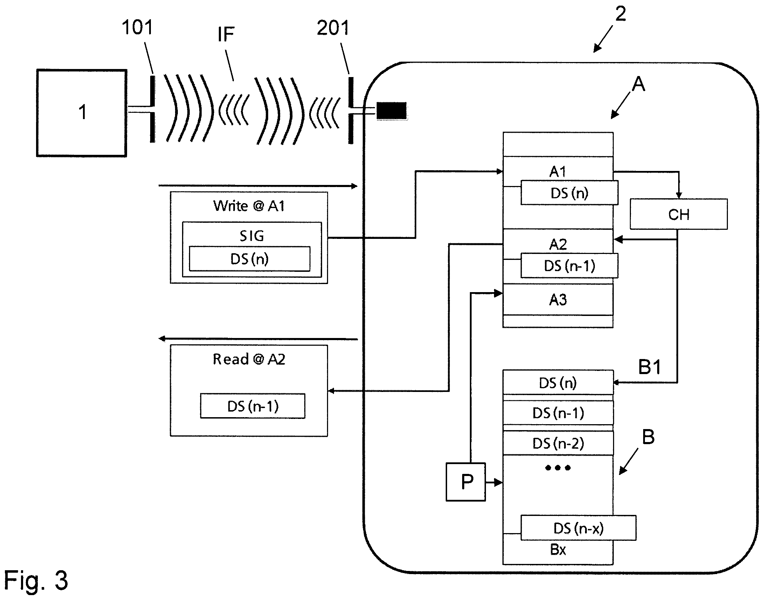

Im Rahmen der in Fig. 1 dargestellten Kommunikation zwischen Lesegerät 1 und Tag 2 wird davon ausgegangen, dass zunächst eine Identifizierung des Tags gegenüber dem Lesegerät basierend auf dem eingangs erwähnten Backscatter-Verfahren durchgeführt wurde. Ferner kann bei der Identifizierung gegebenenfalls ein kryptographisches Protokoll eingesetzt werden, wie z.B. das Protokoll, das in der oben erwähnten Druckschrift von A. Arbit et al. beschrieben ist. Nach der Identifikation sendet das Lesegerät 1 über die Schnittstelle IF mittels eines Schreibkommandos Write@A1 einen ersten Datensatz DS(n) an das Tag 2. Der erste Datensatz wird in einem entsprechenden Speicher S des Tags 2 gespeichert. Dieser Speicher umfasst einen ersten Speicherbereich A und einen zweiten Speicherbereich B, welche in Fig. 1 nicht näher spezifiziert sind, jedoch weiter unten anhand von Fig. 3 erläutert werden.

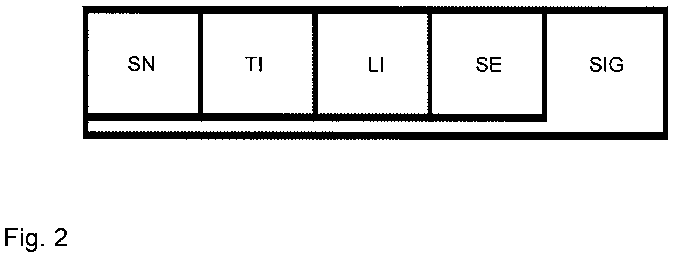

Fig. 2 zeigt den Aufbau des ersten Datensatzes DS(n), der vom Lesegerät 1 an das Tag 2 übermittelt wird. Der Datensatz umfasst eine vom Lesegerät vergebene Sequenznummer SN. Ferner enthält er eine Zeit TI in der Form eines Datums oder einer Uhrzeit, wobei die Genauigkeit der Zeit die Größenordnung von einer Minute nicht zu überschreiten braucht. Ferner ist in dem Feld LI eine Routeninformation hinterlegt, welche die Charakteristiken einer bestimmten Fahrt und Fahrtrichtung, z.B. innerhalb eines Tages, enthält. Ferner ist ein Feld SE vorgesehen, welches den Streckenabschnitt zwischen zwei Haltestellen spezifiziert, an dem das Verkehrsmittel bestiegen wurde. Der Datensatz der Fig. 2 ist ferner mit einer Signatur SIG versehen, welche optional ist und in Fig. 1 bei der Übermittlung des Datensatzes nicht dargestellt ist. Die Signatur kann dabei mit einem Schlüssel generiert sein, der spezifisch für das Lesegerät ist. Ebenso kann gegebenenfalls ein globaler Signaturschlüssel verwendet werden, der im gesamten System gültig ist.

Nach der Übermittlung des ersten Datensatzes DS(n) an das Tag 2 sowie nach entsprechenden Überprüfungsschritten, welche weiter unten anhand von Fig. 3 beschrieben werden, wird gemäß Fig. 1 mittels des Lesekommandos Read@A2 ein zweiter Datensatz DS(n-1) an das Lesegerät übermittelt. Der zweite Datensatz DS(n-1) ist dabei der Datensatz, der bei der letzten Datentransaktion vom Lesegerät 1 zum Tag 2 übermittelt wurde. In der BiBo-Anwendung findet eine Datentransaktion in der Regel dann statt, wenn das Verkehrmittel gewechselt wird. Die im Rahmen einer Datentransaktion ausgetauschten ersten und zweiten Datensätze DS(n) und DS(n-1) werden als Datenpaar DP gespeichert und an die zentrale Rechnereinheit 3 des Systembetreibers übermittelt. Dabei werden von allen Lesegeräten in dem System die entsprechend generierten Datenpaare gesammelt. In der Rechnereinheit 3 werden die einzelnen Datenpaare dann verkettet. In Fig. 1 ist beispielhaft eine solche Verkettung von Datenpaaren wiedergegeben. Aus Übersichtlichkeitsgründen sind nur einige der Datenpaare mit dem Bezugszeichen DP bezeichnet. Die Verkettung erfolgt dabei derart, dass ein Datenpaar mit einem zeitlich späteren Datenpaar verknüpft wird, wenn der erste Datensatz des Datenpaars mit dem zweiten Datensatz des zeitlich späteren Datenpaars übereinstimmt. Diese Verkettung ist in Fig. 1 mit entsprechenden Doppelpfeilen angedeutet. Alle Datenpaare, welche den Index n enthalten, bilden eine durchgehende Kette. Dabei bezeichnen n-6, n-5, ..., n aufeinander folgende Zeitpunkte für die entsprechende Datentransaktionen des Tags 2.

In dem Szenario der Fig. 1 ist ferner zu berücksichtigen, dass ein geklonter Tag 2' parallel zum Tag 2 eingesetzt wurde. Auch dieser Tag hat im Rahmen der Kommunikation mit dem Lesegerät 1 entsprechende Datentransaktionen basierend auf Datensätzen DS(c), DS(c-1) usw. durchgeführt. Die entsprechenden Datensätze bzw. die daraus resultierenden Datenpaare sind dabei in Fig. 1 gepunktet wiedergegeben. Wie man erkennt, können auch diese Datenpaare miteinander verkettet werden, so dass sich zwei parallele Ketten bilden, wobei eine Kette aus den Datensätze für das Tag 2 und die andere Kette aus den Datensätzen für das geklonte Tag 2' besteht. In der Ausführungsform der Fig. 1 wird das Ausbilden von zwei parallelen, unabhängig nebeneinander laufenden Ketten über eine zeitliche Sortierung der gesammelten Datenpaare DP festgestellt. Die Liste der Datenpaare DP aus Fig. 1 ist dabei derart sortiert, dass Datensätze, die später generiert wurden, weiter oben in der Liste stehen. Im Rahmen der Analyse der Sortierung wird nunmehr erkannt, dass sich für bestimmte Datenpaare der zweite Datensatz vom ersten Datensatz des zeitlich vorhergehenden Datenpaares unterscheidet. Diese Fälle sind durch gezackte Symbole z gekennzeichnet. Bei der Erkennung solcher Fälle kann darauf geschlossen werden, dass zeitlich parallel neben dem Tag 2 ein geklonter Tag 2' verwendet wird. Als Konsequenz wird dann vom Systembetreiber der entsprechende Tag 2 und damit auch sein Klon zur weiteren Benutzung gesperrt, um weiteren Missbrauch zu verhindern.

Neben der Klonerkennung basierend auf der zeitlichen Sortierung werden in der Ausführungsform der Fig. 1 auch dann duplizierte Tags detektiert, wenn sich ergibt, dass mehrere Datenpaare existieren, welche unterschiedliche erste Datensätze, jedoch den gleichen zweiten Datensatz umfassen. Diese Situation kann nur auftreten, wenn zwei identische Tags im System genutzt werden. Auch in diesem Fall wird von dem Systembetreiber die entsprechende Sperrung des Tags veranlasst.

Die durch das Lesegerät 1 vergebene Sequenznummer SN (Fig. 2) kann gegebenenfalls zur Erkennung von solchen geklonten Tags genutzt werden, die nach ihrer Erzeugung immer gemeinsam mit dem ursprünglichen Tag verwendet werden. Ohne Sequenznummer würden der ursprüngliche Tag und der geklonte Tag meist die gleichen Datensätze enthalten, sofern die Zeit TI nur grob aufgelöst ist. Nichtsdestotrotz können sie über das Lesegerät getrennt angesprochen werden, was durch das in der Norm ISO/IEC 18000-63 beschriebene Singularisierungsverfahren sichergestellt wird. Durch die Hinzunahme der vom Lesegerät generierten Sequenznummer SN sind die Datensätze jedoch dennoch unterscheidbar, so dass Klone bei der späteren Verarbeitung in der Rechnereinheit 3 erkannt werden können.

In dem System der Fig. 1 führt das Lesegerät, welches mit den Tags im Verkehrmittel kommuniziert, in jedem Streckenabschnitt einer Fahrt eine Inventarisierung durch und kann auf diese Weise auch feststellen, wo ein Tag das Verkehrmittel wieder verlassen hat (bzw. wo es letztmalig anwesend war). Das Tag speichert dabei nur die erstmalige Inventarisierung nach der Route bzw. Linie des Verkehrsmittels (Feld LI der Fig. 2). Nachfolgende Inventarisierungen mit gleicher Route bzw. Linie, jedoch unterschiedlichem Streckenabschnitt derselben Fahrt werden nicht gespeichert. Auf eine Inventarisierungsanfrage des Lesegeräts in der Form des oben beschriebenen ersten Datensatzes antwortet das Tag mit dem zuletzt gespeicherten zweiten Datensatz, welcher der vorhergehenden Fahrt (andere Linie bzw. Route und dergleichen) entspricht.

Wie bereits erwähnt, werden die von den Lesegeräten gesammelten Daten der Tags an einen zentralen Rechner 3 gemeldet, der diese gegebenenfalls mit verschiedenen Umsteigefahrten verknüpft und basierend darauf den Fahrpreis berechnet und gegenüber dem Kunden abrechnet. Mit dem oben beschriebenen Verfahren können dabei Inkonsistenzen durch Verkettung der Datensätze erkannt werden und hierüber geklonte Tags ermittelt werden. Ein Tag, für das ein Klon erkannt wird, führt zu dessen Sperrung und zum Eintrag des Tags in eine Sperrliste, die an die Lesegeräte im System verteilt wird. Der Besitzer des gesperrten Tags wird über die Sperrung benachrichtigt. Das Tag wird daraufhin nicht mehr als Fahrausweis im System akzeptiert.

Nachfolgend wird anhand von Fig. 3 eine Speicherverwaltung der in dem Tag 2 der Fig. 1 verarbeiteten Datensätze beschrieben. Fig. 3 zeigt dabei analog zu Fig. 1 ein Szenario, bei dem vom Lesegerät 1 über die kontaktlose Schnittstelle IF mittels des Schreibkommandos Write@A1 der Datensatz DS(n) mit entsprechender Signatur SIG im Tag 2 hinterlegt wird. Aus Fig. 3 ist dabei der Aufbau der beiden Speicherbereiche A und B des Speichers des Tags ersichtlich. Die über das Schreibkommando spezifizierte Adresse A1 liegt im Speicherbereich A. Dort wird der Datensatz DS(n) zwischengespeichert. Das Schreibkommando ist dabei ein herkömmliches WRITE- bzw. BLOCK_WRITE-Kommando aus der Norm ISO/IEC 18000-63.

Im Rahmen der Überprüfung CH wird zunächst ermittelt, ob der betreffende Datensatz überhaupt gespeichert werden sollte, denn es würde nur unnötigen Speicherplatz verbrauchen, mehrere Datensätze zu dem gleichen Transportvorgang zu speichern. Demzufolge wird der Datensatz mit dem zuletzt gespeicherten Datensatz DS(n-1) verglichen. Dieser Datensatz befindet sich an der Speicheradresse A2 gemäß Fig. 3. Wenn sich die Datensätze unterscheiden, wird in einem nächsten Schritt die Signatur SIG des Datensatzes DS(n) geprüft. Wurde dabei ein für das Lesegerät 1 spezifizierter Schlüssel verwendet, überprüft das Tag 2 zunächst das Zertifikat der Signatur, aus der es dann den öffentlichen Verifizierungsschlüssel entnimmt. Im Falle, dass ein globaler, im gesamten System gültiger Signaturschlüssel verwendet wird, entfällt der Schritt der Zertifikatsverifikation, was jedoch den Nachteil hat, dass das System insgesamt gebrochen wird, falls der Signaturschlüssel kompromittiert wird. Bei der Verwendung von Signaturschlüsseln, welche für die jeweiligen Lesegeräte spezifisch sind, wird das Zertifikat in der Regel mit einer kurzen Laufzeit ausgestellt, so dass ein kompromittierter Leser bereits nach hinreichend kurzer Zeit keine gültigen Datensätze mehr erzeugen kann. Das Tag kann dabei aus dem Zeitstempel seines zuletzt gespeicherten Eintrags darauf schließen, dass die Laufzeit des Signaturschlüssels abgelaufen ist.

Wurde schließlich bei der Überprüfung CH die Notwendigkeit einer Speicherung des Datensatzes DS(n) erkannt sowie die Signatur desselben erfolgreich verifiziert, erfolgt die endgültige Speicherung des Datensatzes an der Speicheradresse A2, wodurch der Datensatz DS(n-1) durch den Datensatz DS(n) ersetzt wird. Zuvor wird jedoch der Datensatz DS(n-1) noch über das Kommando Read @A2 an das Lesegerät 1 übermittelt. Ferner wird der Datensatz DS(n) in dem Ringspeicher bzw. FIFO-Speicher B an der Speicheradresse B1 hinterlegt, mit der Konsequenz, dass der älteste Datensatz DS(n-x), der an der Speicheradresse Bx hinterlegt ist, überschrieben und gelöscht ist. Die Anzahl der älteren vorhergehenden Datensätze im Ringspeicher B kann systemspezifisch festgelegt werden und hängt beispielsweise von der mittleren Nutzungshäufigkeit des Tags, der Abrechnungsperiode und damit zusammenhängenden Größen ab.

Wie oben beschrieben, wird im Rahmen einer Datentransaktion der vorhergehende Datensatz DS(n-1) zur Bildung von Datenpaaren an das Lesegerät 1 über die Schnittstelle IF übermittelt. Hierzu wird das Lesekommando Read@A2 verwendet, mit dem die Speicheradresse A2 ausgelesen wird. Dabei kann wiederum ein herkömmliches READ-Kommando aus dem Standard ISO/IEC 18000-6C verwendet werden. Das Lesekommando kann optional auch bereits von dem Lesegerät verwendet werden, um hierdurch festzustellen, ob es einen weiteren Datensatz zur Speicherung an das Tag senden muss. Auf diese Weise kann der Systemdurchsatz gegebenenfalls optimiert werden.

In der Ausführungsform der Fig. 3 ist ferner eine weitere Speicheradresse A3 vorgesehen, mit der über ein READ-Kommando auf die Adresse A3 das Auslesen des gesamten Ringspeichers B ermöglicht werden kann. Dabei wird bei jedem READ-Kommando ein weiterer älterer Datensatz DS(n-2), ..., DS(n-x) über die Adresse A3 ausgegeben. Dies wird durch den Pointer P erreicht, der nach jedem Auslesen eines Datensatzes auf den vorhergehenden Datensatz im Ringspeicher B verweist. Da sich über den Zugriff auf die Adresse A3 das Bewegungsprofil des Nutzers nachverfolgen lässt, ist diese Funktion nur bestimmten, explizit berechtigten Lesegeräten vorbehalten, die sich zu diesem Zweck gegenüber dem Tag authentifizieren müssen. Die Authentifizierung kann wiederum über ein Public-Key-Protokoll erfolgen. Anhand der aus dem Ringspeicher ausgelesenen Daten kann nachträglich festgestellt werden, welche Fahrten der Benutzer im aufgezeichneten Zeitraum unternommen hat und damit gegebenenfalls eine Abrechnung überprüft werden.

Um zu verhindern, dass der Ringspeicher B sehr schnell durch mehrfaches Schreiben (z.B. durch eine Vielzahl von unterschiedlichen Lesegeräten in einem öffentlichen Verkehrsmittel) überschrieben wird, ist die bereits oben erwähnte Prüfung CH vorgesehen, gemäß der ermittelt wird, ob sich der aktuelle Datensatz vom vorhergehenden Datensatz unterscheidet. Das Tag kann dabei derart eingerichtet sein, dass ein Datensatz nur dann in den Ringspeicher bzw. auf die Adresse A2 geschrieben wird, wenn eine Mindestanforderung an die Differenz zwischen dem aktuellen und dem vorhergehenden Datensatz erkannt wird. Beispielsweise kann der Fall auftreten, dass Lesegeräte in einem öffentlichen Zug alle die gleiche Streckennummer, Zugnummer oder Haltestellennummer im Datensatz übermitteln. Ein Tag würde dann einen Datensatz nach Prüfung z.B. nur dann in den Ringspeicher B bzw. auf die Adresse A2 schreiben, wenn sich Zugnummer oder Haltestellennummer im Datensatz von einem vorher empfangenen Datensatz unterscheiden. Zugnummer und Haltestellennummer sind nur Ausführungsbeispiele. In der Praxis sind weitere Prüfkriterien, wie z.B. die Fahrzeugidentität, die Signatur und dergleichen denkbar.

Die im Vorangegangenen beschriebenen Ausführungsformen des erfindungsgemäßen Verfahrens weisen eine Reihe von Vorteilen auf. Insbesondere wird eine einfache und effiziente Erkennung von duplizierten tragbaren Kommunikationseinheiten bzw. Tags erreicht, ohne dass komplexe kryptographische Protokolle im Tag implementiert werden müssen. Vielmehr wird im System durch die Analyse von Datenpaaren aus aufeinander folgenden Datensätzen erkannt, ob ein Tag geklont wurde. Das Verfahren hat insbesondere Vorteile bei der Verwendung von UHF-Tags, welche über die Energie des Lesegerät-Felds betrieben werden und somit über eine nicht ausreichende Stromversorgung für kryptographische Mechanismen zum Schutz des Tags verfügen.

## Patentansprüche

1. Verfahren zum Überwachen eines Systems aus einer Anzahl von Lesegeräten (1) und einer Vielzahl von tragbaren Kommunikationseinheiten (2), wobei im Betrieb des Systems für eine vorgegebene Kommunikationseinheit (2) eine Vielzahl von Datentransaktionen zwischen zumindest einem Lesegerät (1) und der vorgegebenen Kommunikationseinheit (2) über eine entsprechende Kommunikationsschnittstelle (IF) durchgeführt wird, wobei im Rahmen einer Datentransaktion ein erster Datensatz (DS(n)) von einem Lesegerät (1) zur vorgegebenen Kommunikationseinheit (2) übertragen und dort gespeichert wird sowie ein zweiter Datensatz (DS(n-1), der bei einer zuletzt durchgeführten Datentransaktion in der vorgegebenen Kommunikationseinheit (2) gespeichert wurde, an das Lesegerät (1) übermittelt wird, wobei in einer Rechnereinheit (3) ein Duplizieren der vorgegebenen Kommunikationseinheit (2) erkannt wird, wenn ein Kriterium erfüllt ist, welches von dem ersten Datensatz (DS(n)) und dem zweiten Datensatz (DS(n-1)) abhängt,
**dadurch gekennzeichnet, dass**
in der Rechnereinheit (3)
- eine Verkettung von Datenpaaren (DP) aus dem ersten und zweiten Datensatz (DS(n), DS(n-1)) der jeweiligen Datentransaktionen derart gebildet wird, dass für zwei aufeinander folgende Datenpaare (DP) der erste Datensatz (DS(n)) des einen Datenpaars (DP) dem zweiten Datensatz (DS(n-1)) des anderen Datenpaars (DP) entspricht;
- beim Bilden der Verkettung das Kriterium überprüft wird, welches dann erfüllt ist, wenn die Verkettung mehrere parallele Ketten von Datenpaaren (DP) für die in zeitlicher Reihenfolge angeordneten Datenpaare (DP) aufweist oder wenn zwei Datenpaare (DP) aufgefunden werden, welche unterschiedliche erste Datensätze (DS(n)) bei gleichem zweiten Datensatz (DS(n-1)) umfassen.

2. Verfahren nach Anspruch 1, **dadurch gekennzeichnet, dass** die Kommunikationseinheiten (2) Transponder sind, welche über eine kontaktlose Kommunikationsschnittstelle (IF) mit der Anzahl von Lesegeräten (1) kommunizieren, wobei die Transponder insbesondere RFID-Transponder und vorzugsweise UHF-RFID-Transponder sind.

3. Verfahren nach Anspruch 1 oder 2, **dadurch gekennzeichnet, dass** ein jeweiliger erster Datensatz (DS(n)) eine Zeitinformation (TI) betreffend die Durchführung der Datentransaktion unter Verwendung dieses ersten Datensatzes (DS(n)) umfasst, wobei die Datenpaare (DP) in der zeitlichen Reihenfolge der Zeitinformationen ihrer ersten Datensätze (DS(n)) angeordnet werden und mehrere parallele Ketten dann detektiert werden, wenn sich ein zweiter Datensatz (DS(n-1)) eines Datenpaars (DP) vom ersten Datensatz (DS(n)) eines in der zeitlichen Reihenfolge unmittelbar vorhergehenden Datenpaars (DP) unterscheidet.

4. Verfahren nach einem der vorhergehenden Ansprüche, **dadurch gekennzeichnet, dass** die jeweiligen zweiten Datensätze (DS(n-1)) ohne von der vorgegebenen Kommunikationseinheit (2) hinzugefügte Zusatzinformationen übermittelt werden.

5. Verfahren nach einem der vorhergehenden Ansprüche, **dadurch gekennzeichnet, dass** der erste Datensatz (DS(n)) im Rahmen einer Datentransaktion in Kombination mit einem Schreibkommando übermittelt wird, welches eine erste Speicheradresse (A1) in einem Speicher (A) der vorgegebenen Kommunikationseinheit (2) spezifiziert, woraufhin der erste Datensatz (DS(n)) an der ersten Speicheradresse (A1) gespeichert wird.

6. Verfahren nach Anspruch 5, **dadurch gekennzeichnet, dass** der erste Datensatz (DS(n)) vor einer endgültigen Speicherung an einer zweiten Speicheradresse (A2) zunächst temporär an der ersten Speicheradresse (A1) gespeichert wird, bis der erste Datensatz (DS(n)) einer Überprüfung unterzogen wurde.

7. Verfahren nach Anspruch 6, **dadurch gekennzeichnet, dass** bei der Überprüfung der erste Datensatz (DS(n)) mit dem bei der zuletzt durchgeführten Datentransaktion gespeicherten ersten Datensatz (DS(n)) verglichen wird und/oder eine Signatur verifiziert wird, welche dem ersten Datensatz (DS(n)) vom Lesegerät (1) hinzugefügt wurde, wobei im Falle einer ausreichenden Differenz zwischen dem ersten Datensatz (DS(n)) und dem bei der zuletzt durchgeführten Datentransaktion gespeicherten ersten Datensatz (DS(n)) und/oder bei einer erfolgreichen Verifikation der Signatur der erste Datensatz (DS(n)) an der zweiten Speicheradresse (A2) gespeichert wird und ansonsten der erste Datensatz (DS(n)) verworfen wird.

8. Verfahren nach Anspruch 6 oder 7, **dadurch gekennzeichnet, dass** im Rahmen einer Datentransaktion der an der zweiten Speicheradresse (A2) gespeicherte erste Datensatz (DS(n)) der vorhergehenden Datentransaktion mittels eines Lesekommandos als zweiter Datensatz (DS(n-1)) ausgelesen und an das Lesegerät (1) übermittelt wird.

9. Verfahren nach einem der vorhergehenden Ansprüche, **dadurch gekennzeichnet, dass** für mehrere in der Vergangenheit durchgeführte und aufeinander folgende Datentransaktionen die jeweiligen ersten Datensätze (DS(n)) in der vorgegebenen Kommunikationseinheit (2) gespeichert werden, vorzugsweise in einem Ringspeicher oder FIFO-Speicher (B).

10. Verfahren nach Anspruch 9, **dadurch gekennzeichnet, dass** die jeweiligen ersten Datensätze (DS(n)) der in der Vergangenheit durchgeführten und aufeinander folgenden Datentransaktionen durch aufeinander folgende Lesekommandos auf eine vorbestimmte Speicheradresse (A3) in der vorgegebenen Kommunikationseinheit (2) ausgelesen werden können.

11. Verfahren nach einem der vorhergehenden Ansprüche, **dadurch gekennzeichnet, dass** das System mehrere Lesegeräte (1) umfasst und die sich aus den Datentransaktionen der jeweiligen Lesegeräte (1) ergebenden Datenpaare (DP) an die Rechnereinheit (3) übermittelt werden, welche die Datenpaare zentral auswertet, um duplizierte Kommunikationseinheiten (2') zu erkennen.

12. Verfahren nach einem der vorhergehenden Ansprüche, **dadurch gekennzeichnet, dass** das System ein Fahrkartensystem für einen öffentlichen Personenverkehr ist und die ersten Datensätze (DS(n)) jeweils eine Streckeninformation beinhalten, welche insbesondere eine Route und einen Steckenabschnitt auf der Route umfasst.

13. System aus einer Anzahl von Lesegeräten (1) und einer Vielzahl von tragbaren Kommunikationseinheiten (2), wobei im Betrieb des Systems für eine vorgegebene Kommunikationseinheit (2) eine Vielzahl von Datentransaktionen zwischen zumindest einem Lesegerät (1) und der vorgegebenen Kommunikationseinheit (2) über eine entsprechende Kommunikationsschnittstelle (IF) durchgeführt werden, wobei im Rahmen einer Datentransaktion ein erster Datensatz (DS(n)) von einem Lesegerät (1) zur vorgegebenen Kommunikationseinheit (2) übertragen und dort gespeichert wird sowie ein zweiter Datensatz (DS(n-1)), der bei einer zuletzt durchgeführten Datentransaktion in der vorgegebenen Kommunikationseinheit (2) gespeichert wurde, an das Lesegerät (1) übermittelt wird, wobei das System eine Rechnereinheit (3) umfasst, mittels der ein Duplizieren der vorgegebenen Kommunikationseinheit (2) dann erkannt wird, wenn ein von den beiden Datensätzen abhängendes Kriterium erfüllt ist,
**dadurch gekennzeichnet, dass**
die Rechnereinheit (3) eingerichtet ist
- eine Verkettung von Datenpaaren (DP) aus dem ersten und zweiten Datensatz (DS(n), DS(n-1)) der jeweiligen Datentransaktionen derart zu bilden, dass für zwei aufeinander folgende Datenpaare (DP) der erste Datensatz (DS(n)) des einen Datenpaars (DP) dem zweiten Datensatz (DS(n-1)) des anderen Datenpaars (DP) entspricht;
- beim Bilden der Verkettung das Kriterium zu überprüfen, welches dann erfüllt ist, wenn die Verkettung mehrere parallele Ketten von Datenpaaren (DP) für die zeitlich sortierten Datenpaare (DP) aufweist oder wenn zwei Datenpaare (DP) aufgefunden werden, welche unterschiedliche erste Datensätze (DS(n)) bei gleichem zweiten Datensatz (DS(n-1)) umfassen.

14. System nach Anspruch 13, **dadurch gekennzeichnet, dass** das System zur Durchführung eines Verfahrens nach einem der Ansprüche 2 bis 12 ausgestaltet ist.

## Claims

1. A method for monitoring a system comprising a number of reading devices (1) and a plurality of portable communication units (2), wherein during operation of the system, for a given communication unit (2) there are carried out a plurality of data transactions between at least one reading device (1) and the given communication unit (2) via a corresponding communication interface (IF), wherein within the framework of a data transaction a first data set (DS(n)) is transmitted from a reading device (1) to the given communication unit (2) and stored there and a second data set (DS(n-1)), which was stored in the given communication unit (2) upon a most recently carried out data transaction, is transferred to the reading device (1), wherein in a computer unit (3) a duplication of the given communication unit (2) is recognized when a criterion is fulfilled which depends on the first data set (DS(n)) and the second data set (DS(n-1)),
**characterized in that**
in the computer unit (3)
- a chaining of data pairs (DP) from the first and second data set (DS(n), DS(n-1)) of the respective data transactions is formed in such a way that for two consecutive data pairs (DP) the first data set (DS(n)) of the one data pair (DP) corresponds to the second data set (DS(n-1)) of the other data pair (DP);
- upon forming the chaining there is checked the criterion which is fulfilled when the chaining has several parallel chains of data pairs (DP) for the data pairs (DP) arranged according to a time sequence or when two data pairs (DP) are found which include different first data sets (DS(n)) with the same second data set (DS(n-1));

2. The method according to claim 1, **characterized in that** the communication units (2) are transponders which communicate via a contactless communication interface (IF) with the number of reading devices (1), wherein the transponders are in particular RFID transponders and preferably UHF-RFID transponders.

3. The method according to claim 1 or 2, **characterized in that** a respective first data set (DS(n)) includes a time information item (TI) which relates to the carrying out of the data transaction using this first data set (DS(n)), wherein the data pairs (DP) are arranged according to the time sequence of the time information items of their first data sets (DS(n)) and several parallel chains are detected when a second data set (DS(n-1)) of a data pair (DP) differs from the first data set (DS(n)) of a data pair (DP) directly preceding in the time sequence.

4. The method according to any of the preceding claims, **characterized in that** the respective second data sets (DS(n-1)) are transferred without additional information items added by the given communication unit (2).

5. The method according to any of the preceding claims, **characterized in that** the first data set (DS(n)) is transferred within the framework of a data transaction in combination with a write command which specifies a first memory address (A1) in a memory (A) of the given communication unit (2), whereupon the first data set (DS(n)) is stored at the first memory address (A1).

6. The method according to claim 5, **characterized in that** before a final storing at a second memory address (A2) the first data set (DS(n)) is first temporarily stored at the first memory address (A1), until the first data set (DS(n)) was subjected to a check.

7. The method according to claim 6, **characterized in that** upon the check the first data set (DS(n)) is compared with the first data set (DS(n)) stored upon the most recently carried out data transaction and/or a signature is verified which was added to the first data set (DS(n)) by the reading device (1), wherein in the case of a sufficient difference between the first data set (DS(n)) and the first data set (DS(n)) stored upon the most recently carried out data transaction and/or upon a successful verification of the signature, the first data set (DS(n)) is stored at the second memory address (A2), and otherwise the first data set (DS(n)) is discarded.

8. The method according to claim 6 or 7, **characterized in that** within the framework of a data transaction the first data set (DS(n)) of the preceding data transaction, which has been stored at the second memory address (A2), is read out as a second data set (DS(n-1)) by means of a read command and transferred to the reading device (1).

9. The method according to any of the preceding claims, **characterized in that** for several consecutive data transactions carried out in the past the respective first data sets (DS(n)) are stored in the given communication unit (2), preferably in a circular buffer or FIFO memory (B).

10. The method according to claim 9, **characterized in that** the respective first data sets (DS(n)) of the consecutive data transactions carried out in the past can be read out to a predetermined memory address (A3) in the given communication unit (2) by consecutive read commands.

11. The method according to any of the preceding claims, **characterized in that** the system includes several reading devices (1) and the data pairs (DP) resulting from the data transactions of the respective reading devices (1) are transferred to the computer unit (3) which centrally evaluates the data pairs in order to recognize duplicated communication units (2').

12. The method according to any of the preceding claims, **characterized in that** the system is a transport ticket system for a public transport and the first data sets (DS(n)) respectively contain a path information which in particular includes a route and a path section on the route.

13. A system comprising a number of reading devices (1) and a plurality of portable communication units (2), wherein during operation of the system, for a given communication unit (2) there are carried out a plurality of data transactions between at least one reading device (1) and the given communication unit (2) via a corresponding communication interface (IF), wherein within the framework of a data transaction a first data set (DS(n)) is transmitted from a reading device (1) to the given communication unit (2) and stored there and a second data set (DS(n-1))), which was stored in the given communication unit (2) upon a most recently carried out data transaction, is transferred to the reading device (1), wherein the system includes a computer unit (3) by means of which a duplication of the given communication unit (2) is recognized when a criterion depending on the two data sets is fulfilled,
**characterized in that**
the computer unit (3) is adapted for
- forming a chaining of data pairs (DP) from the first and second data set (DS(n), DS(n-1)) of the respective data transactions in such a way that for two consecutive data pairs (DP) the first data set (DS(n)) of the one data pair (DP) corresponds to the second data set (DS(n-1)) of the other data pair (DP);
- upon forming the chaining, checking the criterion which is fulfilled when the chaining has several parallel chains of data pairs (DP) for the data pairs (DP) sorted by time or when two data pairs (DP) are found which include different first data sets (DS(n)) with the same second data set (DS(n-1)).

14. The system according to claim 13, **characterized in that** the system is configured for carrying out a method according to any of claims 2 to 12.

## Revendications

1. Procédé de surveillance d'un système consistant en un certain nombre d'appareils de lecture (1) et en une pluralité d'unités de communication (2) portables, cependant que, pendant le fonctionnement du système, pour une unité de communication (2) prédéterminée, une pluralité de transactions de données entre au moins un appareil de lecture (1) et l'unité de communication (2) prédéterminée est effectuée par l'intermédiaire d'une interface de communication (IF) correspondante, cependant que, dans le cadre d'une transaction de données, un premier jeu de données (DS(n)) est transféré d'un appareil de lecture (1) à l'unité de communication (2) prédéterminée et y est mémorisé, et un deuxième jeu de données (DS(n-1) qui a été mémorisé dans l'unité de communication (2) prédéterminée lors d'une transaction de données effectuée en dernier lieu est transmis à l'appareil de lecture (1), cependant que, dans une unité de calcul (3), une duplication de l'unité de communication (2) prédéterminée est reconnue quand un critère dépendant du premier jeu de données (DS(n)) et du deuxième jeu de données (DS(n-1)) est rempli,
**caractérisé en ce que**
dans l'unité de calcul (3)
- une concaténation de paires de données (DP) issues du premier et du deuxième jeu de données (DS(n), (DS(n-1)) des transactions de données respectives est constituée de telle façon que, pour deux paires de données (DP) consécutives, le premier jeu de données (DS(n)) de la une paire de données (DP) correspond au deuxième jeu de données (DS(n-1)) de l'autre paire de données (DP) ;
- lors de la constitution de la concaténation, le critère est contrôlé, lequel est rempli quand la concaténation comporte plusieurs chaînes parallèles de paires de données (DP) pour les paires de données (DP) ordonnées par ordre chronologique, ou quand deux paires de données (DP) comprenant différents premiers jeux de données (DS(n)) pour le même deuxième jeu de données (DS(n-1)) sont trouvées.

2. Procédé selon la revendication 1, **caractérisé en ce que** les unités de communication (2) sont des transpondeurs qui communiquent par l'intermédiaire d'une interface de communication (IF) sans contact avec le certain nombre d'appareils de lecture (1), cependant que les transpondeurs sont en particulier des transpondeurs RFID et de préférence des transpondeurs RFID UHF.

3. Procédé selon la revendication 1 ou 2, **caractérisé en ce qu'**un respectivement premier jeu de données (DS(n)) comprend une information de temps (TI) concernant la réalisation de la transaction de données avec utilisation de ce premier jeu de données (DS(n)), cependant que les paires de données (DP) sont ordonnées dans l'ordre chronologique des informations de temps de leur premier jeu de données (DS(n)) et que plusieurs chaînes parallèles sont détectées quand un deuxième jeu de données (DS(n-1)) d'une paire de données (DP) se différencie du premier jeu de données (DS(n)) d'une paire de données (DP) immédiatement précédente dans l'ordre chronologique.

4. Procédé selon une des revendications précédentes, **caractérisé en ce que** les respectivement deuxièmes jeux de données (DS(n-1)) sont transmis sans informations supplémentaires ajoutées par l'unité de communication (2) prédéterminée.

5. Procédé selon une des revendications précédentes, **caractérisé en ce que** le premier jeu de données (DS(n)) est transmis dans le cadre d'une transaction de données en combinaison avec une instruction d'écriture qui spécifie une première adresse mémoire (A1) dans une mémoire (A) de l'unité de communication (2) prédéterminée, à la suite de quoi le premier jeu de données (DS(n)) est mémorisé à la première adresse mémoire (A1).

6. Procédé selon la revendication 5, **caractérisé en ce que** le premier jeu de données (DS(n)) est, avant une mise définitive en mémoire à une deuxième adresse mémoire (A2), mis tout d'abord temporairement en mémoire à la première adresse mémoire (A1) jusqu'à ce que le premier jeu de données (DS(n)) ait été soumis à un contrôle.

7. Procédé selon la revendication 6, **caractérisé en ce que**, lors du contrôle, le premier jeu de données (DS(n)) est comparé avec le premier jeu de données (DS(n)) mémorisé lors de la transaction de données effectuée en dernier lieu et/ou une signature est vérifiée, laquelle a été ajoutée par l'appareil de lecture (1) au premier jeu de données (DS(n)), cependant que, dans le cas d'une différence suffisante entre le premier jeu de données (DS(n)) et le premier jeu de données (DS(n)) mémorisé lors de la transaction de données effectuée en dernier lieu et/ou lors d'une vérification aboutie de la signature, le premier jeu de données (DS(n)) est mémorisé à la deuxième adresse mémoire (A2), et autrement le premier jeu de données (DS(n)) est rejeté.

8. Procédé selon la revendication 6 ou 7, **caractérisé en ce que**, dans le cadre d'une transaction de données, le premier jeu de données (DS(n)) de la transaction de données précédente mémorisé à la deuxième adresse mémoire (A2) est, au moyen d'une instruction de lecture, lu en tant que deuxième jeu de données (DS(n-1)) et transmis à l'appareil de lecture (1).

9. Procédé selon une des revendications précédentes, **caractérisé en ce que**, pour plusieurs transactions de données effectuées dans le passé et consécutives, les respectivement premiers jeux de données (DS(n)) sont mémorisés dans l'unité de communication (2) prédéterminée, de préférence dans une mémoire annulaire ou une mémoire FIFO (B).

10. Procédé selon la revendication 9, **caractérisé en ce que** les respectivement premiers jeux de données (DS(n)) des transactions de données effectuées dans le passé et consécutives peuvent être lus dans l'unité de communication (2) prédéterminée au moyen d'instructions de lecture consécutives visant une adresse mémoire (A3) préétablie.

11. Procédé selon une des revendications précédentes, **caractérisé en ce que** le système comprend plusieurs appareils de lecture (1) et que les paires de données (DP) découlant des transactions de données des appareils de lecture (1) respectifs sont transférées à l'unité de calcul (3), laquelle évalue centralement les paires de données afin de reconnaître les unités de communication (2') dupliquées.

12. Procédé selon une des revendications précédentes, **caractérisé en ce que** le système est un système de billetterie pour les transports publics de passagers et que les premiers jeux de données (DS(n)) contiennent respectivement une information d'itinéraire comprenant en particulier un trajet ou un tronçon d'itinéraire sur le trajet.

13. Système consistant en un certain nombre d'appareils de lecture (1) et en une pluralité d'unités de communication (2) portables, cependant que, pendant le fonctionnement du système, pour une unité de communication (2) prédéterminée, une pluralité de transactions de données entre au moins un appareil de lecture (1) et l'unité de communication (2) prédéterminée sont effectuées par l'intermédiaire d'une interface de communication (IF) correspondante, cependant que, dans le cadre d'une transaction de données, un premier jeu de données (DS(n)) est transféré d'un appareil de lecture (1) à l'unité de communication (2) prédéterminée et y est mémorisé, et un deuxième jeu de données (DS(n-1) qui a été mémorisé dans l'unité de communication (2) prédéterminée lors d'une transaction de données effectuée en dernier lieu est transmis à l'appareil de lecture (1), cependant que le système comprend une unité de calcul (3) au moyen de laquelle une duplication de l'unité de communication (2) prédéterminée est reconnue quand un critère dépendant des deux jeux de données est rempli,
**caractérisé en ce que**
l'unité de calcul (3) est configurée pour
- constituer de telle façon une concaténation de paires de données (DP) issues du premier et du deuxième jeu de données (DS(n), (DS(n-1)) des transactions de données respectives que, pour deux paires de données (DP) consécutives, le premier jeu de données (DS(n)) de la une paire de données (DP) correspond au deuxième jeu de données (DS(n-1)) de l'autre paire de données (DP) ;
- lors de la constitution de la concaténation, contrôler le critère, lequel est rempli quand la concaténation comporte plusieurs chaînes parallèles de paires de données (DP) pour les paires de données (DP) ordonnées par ordre chronologique ou quand deux paires de données (DP) comprenant différents premiers jeux de données (DS(n)) pour le même deuxième jeu de données (DS(n-1)) sont trouvées.

14. Système selon la revendication 13, **caractérisé en ce que** le système est conçu pour la réalisation d'un procédé selon une des revendications de 2 à 12.
